Europäisches Patentamt

(19) European Patent Office

Office européen des brevets

(11) Publication number: **0 123 366**
**B1**

(12) **EUROPEAN PATENT SPECIFICATION**

(45) Date of publication of the patent specification:
05.11.86

(21) Application number: **84200588.6**

(22) Date of filling: **25.04.84**

(51) Int. Cl.⁴: **F 16 B 13/06,** F 16 B 13/14

(54) Hammer plug.

(30) Priority: **25.04.83 NL 8301452**

(43) Date of publication of application:
**31.10.84 Bulletin 84/44**

(45) Publication of the grant of the patent:
**05.11.86 Bulletin 86/45**

(84) Designated Contracting States:
**AT BE CH DE FR GB IT LI LU NL SE**

(56) References cited:
**DE-A-2 646 007**
**DE-A-3 018 975**
**GB-A-2 033 524**
**NL-A-7 700 568**

(73) Proprietor: **J.H. DE WIT EN ZONEN B.V., Postbus
60, NL- 5700 AB Helmond (NL)**

(72) Inventor: **Thoolen, Wilhelmus Fransiscus,
Verrelstraat 3, NL- 6077 GR St. Odilienberg (NL)**

(74) Representative: **van der Beek, George Frans, Ir.,
Nederlandsch Octrooibureau P.O. Box 29720, NL-
2502 LS The Hague (NL)**

EP 0 123 366 B1

## Description

The invention relates to a hammer plug, consisting of a plug formed of infection-moulded plastics material and a metal insert nail, which is pre-mounted in the plug over a part of its length, whereby the plug consists of a shaft adapted to be received in fitting holes in a base structure such as a wall or the like and in a member to be fixed against the base structure, such as a batten or the like, and a collar adapted to press the member with prestress against the base structure in the fixed position of the plug and whereby the insert nail over at least a part of its length is provided with a screw thread preferably a saw tooth thread, the collar and the shaft of the plug being provided with a substantially cylindrical bore up to a safety means preventing premature expansion of the plug by the insert nail, while the shaft beyond said safety means up to the free end of the shaft is provided with longitudinal slots for forming expanding legs, as well as with a substantially cylindrical bore with a smaller diameter than the diameter of the cylindrical bore before the safety means preventing premature expansion.

Such a hammer plug is known from GB-A-2 033 524. Here the safety means preventing premature expansion is formed by a web of the plug shaft, against which the tip of the insert nail is lying in pre-mounted condition. This hammer plug consists of a plug of plastic material and of the insert nail, which is inserted already to the web in the plug. Thus, plug and nail form one unity.

In order to fix a member, such as a batten against a base structure such as a wall, a continuous hole is drilled in batten and wall, the diameter of which is adapted to the outer diameter of the shaft of the plug. The hammer plug is then inserted in the bore by hand as far as possible. Generally the lower side of the collar of the plug does not yet abut against the member and/or the member does not yet abut against the wall, since sometimes at insertion of the hammer plug in the bore a considerable friction has to be overcome, for instance by the presence of drilling rests in the bore in the wall.

When now with a hammer or the like is struck on the head of the insert nail first of all the plug will be struck completely within the bore, so that the collar abuts against the member and the member abuts against the wall. Not before now, the safety means preventing premature expansion may be rendered inoperative, by which the insert nail is struck completely into the plug and the expanded legs clamp within the bore in the wall.

When the toothening on a stem of the insert nail is formed by screw thread and in the head a straight notch, cross notch or internal hexagon is present, it is possible to remove the insert nail from the plug by screwing. However, this is not essential, since removing is only seldom necessary.

The advantage of a hammer plug however, is that one continuous hole may be drilled and that fixing takes place by striking instead of screwing.

At the known hammer plug there is the disadvantage, that the tip of the insert nail can tear open the web in the plug before the plug has reached its end position within the bore of the hole. This may happen, when the resistance in the bore in the wall is great.

In that case the plug will expand on the spot of the web and clamp in the wall bore, before the collar of the plug presses the member to be fixed against the base structure with pre-stress. The hammer plug will not function then.

Another disadvantage concerns the manufacture of the plug. Such plugs are manufactured by infection moulding with an axial central mandrel in the injection die providing for the forming of the different cylindrical bores. By the presence of the web it is not possible to apply one continuous mandrel which makesdifficult the manufacture and makes it expensive.

The invention aims to improve the known hammer plug, and according to the invention this is obtained in that said safety means is formed by a shaft portion of the plug with a substantially cylindrical bore, the diameter of which being smaller than the diameter of the first mentioned cylindrical bore and larger than the diameter of the second mentioned cylindrical bore, which cylindrical bore terminates at the beginning of the longitudinal slots, after which the cylindrical bore gradually changes into the smaller cylindrical bore and in that the outer diameter of said shaft portion is smaller than the outer diameter of the rest of the shaft.

In this way a continuous mandrel may be used, while at the same time a sufficient safety against premature expansion is obtained namely owing to the internal and external decrease of the diameter.

Even when the narrowed shaft portion would expand too early, it is prevented that the plug clamps within the hole.

In order to prevent that the insert nail is removed from the plug in the pre-mounted position in the larger cylindrical bore in front of the safety means preventing premature expansion ribs such as longitudinal ribs are present directed inwardly to hold the insert nail in pre-mounted condition with the tip partly received in the narrowed shaft portion.

It is remarked that from NL-A-7700568 a hammer plug is known, whereby also a continuous axial bore is present.

The safety means preventing premature expansion is formed by a conical bore within the expansion portion of the plug and a bead-shaped groove in the nail, in which a bead-shaped edge of the plug engages in pre-mounted condition. Thus, this requires an additional treatment of the insert nail, by which it will be more expensive.

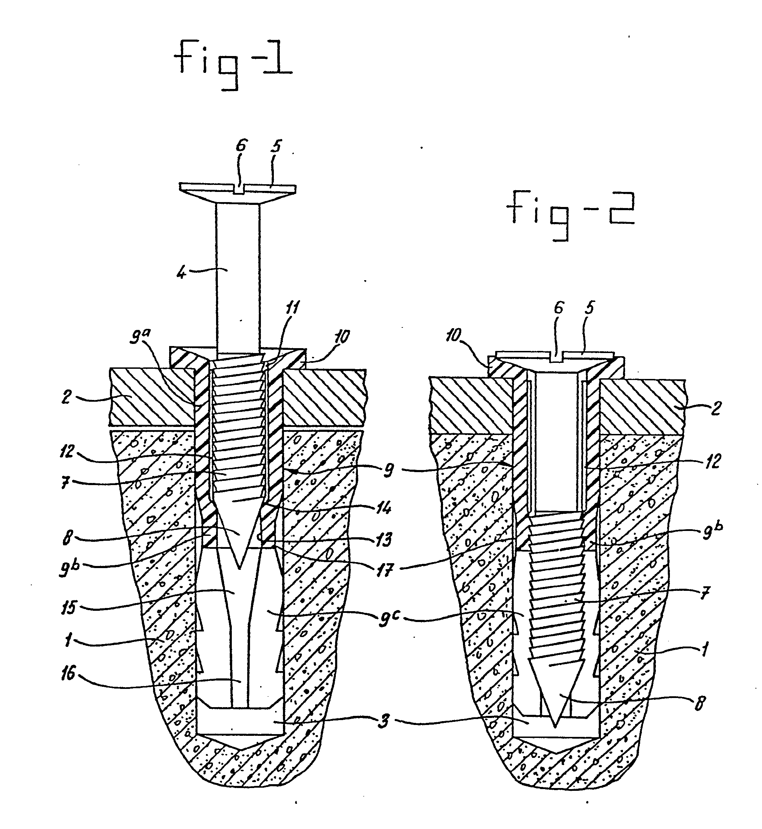

The invention will now be declared with reference to the drawing, in which longitudinal sections are shown of the hammer plug according to the invention and namely in fig. 1 after applying by hand in the hole and in fig. 2 after striking of the insert nail.

In the drawing the base structure generally a masonry or concrete wall is indicated with 1. The member to be fixed, for instance a batten for a slab wall or the like is indicated with 2. In the member 2 and in the wall 1 a continuous cylindrical bore 3 is drilled in a conventional way.

The hammer plug according to the invention consists in the first place of a coventional metal insert nail. Its stem is indicated with 4, the head with 5, the saw notch in the head with 6, the saw tooth-shaped screw thread with 7 and the tip with 8. Obviously instead of a straight saw notch 6 also a cross saw notch or an internal hexagon may be present in the head 5.

The plug comprises a shaft 9 and a collar 10 and is manufactured of high quality plastic material.

The shaft consists of three portions, namely the portion 9a connected to the collar 10, the narrower portion 9b forming the safety to prevent premature expansion of the plug and an expandable portion 9c.

In the portion 9a of the shaft 9 an axial cylindrical bore 11 is present with circumferentially a number of, for instance three or four, longitudinal ribs 12. These longitudinal ribs 12 are adapted for engaging the thread portion 7 of the insert nail in its pre-mounted position, as shown in fig. 1.

In this pre-mounted position the tip 8 of the insert nail profects in the portion 9b of the shaft 9 of the plug.

This portion 9b is provided with a cylindrical bore 13, having a diameter which is smaller than the diameter of the bore 11. The transition between the bore 11 and the bore 13 is formed by a conical wall 14.

At the end of the cylindrical bore 13 longitudinal slots start, so that in a known way both expandable legs 9c are formed.

The cylindrical bore 13 changes through a conical bore 15 extending in the upper portion of the expandable legs 9c into a cylindrical bore 16 of smaller diameter.

The shaft portion 9b has an external diameter 17 being smaller than the diameter of the rest of the shaft 9.

In fig. 1 the position of the hammer plug is shown, after arranging it by hand in the bore 3. The member 2 to be fixed does not yet abut against the wall 1 and/or the collar 10 does not yet abut against the member 2.

When then it is struck on the head 5 of the insert nail the nail will be driven inwards until the position according to fig. 2. In this position the expandable legs 9c are clamped in a known way against the inner wall of the bore 3. Striking the tip 8 of the nail exerts a drawing action on the plug so that the plug is drawn so far in the bore 3, that the member 2 abuts against the wall 1 under pre-stress. Even when owing to a great resistance as to friction in the bore 3 the safety means preventing premature expansion should be inoperative too early, by the external narrowing of the shaft portion 9b it is prevented, that this shaft portion will clamp too early in the bore 3, so that the plug should not reach its end position in the bore 3.

The bores 11, 14, 13, 15, 16 in the plug form a continuous bore, so that during infection moulding one mandrel can be used, which moreover is self-releasing.

### Claim

Hammer plug consisting of a plug formed of infection- moulded plastics material and a metal insert nail, which is pre-mounted in the plug over a part of its length, whereby the plug consists of a shaft (9) adapted to be received in fitting holes (3) in a base structure (1) such as a wall or the like and in a member (2) to be fixed against the base structure, such as a batten or the like and a collar (10) adapted to press the member with pre-stress against the base structure in the fixed position of the plug and whereby the insert nail over at least a part of its length is provided with a screw thread preferably a saw tooth thread, the collar and the shaft of the plug being provided with a substantially cylindrical bore (11) up to a safety means (9b) preventing premature expansion of the plug by the insert nail, while the shaft beyond said safety means up to the free end of the shaft is provided with longitudinal slots for forming expanding legs (9c), as well as with a substantially cylindrical bore (16) with a smaller diameter than the diameter of the cylindrical bore (11) before the safety means preventing premature expansion, characterized in that said safety is formed by a shaft portion (9b) of the plug with a substantially cylindrical bore (13), the diameter of which being smaller than the diameter of the first mentioned cylindrical bore (11) and larger than the diameter of the second mentioned cylindrical bore (16), which cylindrical bore (13) terminates at the beginning of the longitudinal slots, after which the cylindrical bore (13) gradually changes into the smaller cylindrical bore (16) and in that the outer diameter of said shaft portion (9b) is smaller than the outer diameter of the rest of the shaft (9).

### Patentansprüche

Nageldübel, bestehend aus einem spritzgegossenen Runststoffdübel und einem metallenen Einschlagnagel der über einen Teil seiner Länge in dem Dübel vormontiert ist, wobei der Dübel besteht aus sinem Schaft (9), der zur Aufnahme in Montagebohrungen (3) in einem Grundkörper (1) wie einer Hand od.dgl. und in einem an dem Grundkörper zu befestigenden Teil (2) wie einem Brett od.dgl. angepaßt ist, und einem Kragen (10), der angepaßt ist, das Teil in der Befestigungslage des Dübels mit Vorspannung gegen den Grundkörper zu drücken, wobei ferner der Einschlagnagel über zumindest einen Teil seiner Länge mit einem Schraubgewinde, vorzugsweise einem Sägezahngewinde, versehen ist und der Kragen und der Schaft des Dübels mit einer im wesentlicben zylindrischen Bohrung (11) bis zu einer Sicherungseinrichtung (9b) zum Verbindern der vorzeitigen Aufweitung des Dübels durch den Einschlagnagel versehen sind, während der Schaft hinter der Sicherungseinrichtung bis zu seinem freien Ende Längsschlitze zur Bildung von Aufweitschenkeln (9c) ebenso aufweist wie eine im wesentlichen zylindrische Bohrung (16) mit einem kleineren Durchmesser als dem Durchmesser der zylindrischen Bohrung (11) vor der Sicherungseinrichtung zum Verhindern einer vorzeitigen Aufweitung,

dadurch gekennzeichnet, daß die Sicherungseinrichtung von einem Schaftteil (9b) des Dübels mit einer im wesentlichen zylindrischen Bohrung (13) gebildet ist, deren Durchmesser kleiner als der Durchmesser der ersten zylindrischen Bohrung (11) und größer als der Durchmesser der zweiten zylindrischen Bohrung (16) ausgebildet ist, wobei die zylindrische Bohrung (13) am Anfang der Längsschlitze endet, hinter welchen die zylindrische Bohrung (13) allmählich in die kleinere zylindrische Bohrung (16) übergeht, und daß der Außendurchmesser des Schaftteiles (9b) kleiner als der Außendurchmesser des übrigen Schaftes (9) ausgebildet ist.

**Revendication**

Cheville à clou comportant une cheville formée dans une matière plastique moulée par injection et un clou prisonnier métallique, qui est préalablement monté dans la cheville sur une partie de sa longueur, la cheville proprement dite comportant un fût (9) adapté pour être logé dans des trous (3) percés dans une structure de base (1) telle qu'un mur ou l'analogue, et dans un élément (2) à fixer contre cette structure de base, par exemple une volige ou l'analogue, et une collerette (10) adaptée pour appliquer sous précontrainte l'élément contre la structure de base dans la position fixée de la cheville, le clou prisonnier présentant au moins sur une partie de sa longueur un filetage, de préférence un filetage en dents de scie, la collerette et le fût de la cheville comportant un alésage pratiquement cylindrique (11) jusqu'à un moyen de sécurité (9b) empêchant une dilatation prématurée de la cheville par le clou prisonnier, tandis que le fût au-delà de ce moyen de sécurité jusqu'à son extrémité libre présente des fentes longitudinales pour former des branches dilatables (9c) ainsi qu'un alésage pratiquement cylindrique (16) ayant un diamètre plus petit que le diamètre de l'alésage cylindrique (11) avant le moyen de sécurité empêchant une dilatation prématurée, caractérisée en ce que ce moyen de sécurité est formé par une portion de fût (9b) de la cheville avec un alésage pratiquement cylindrique (13) dont le diamètre est plus petit que le diamètre de l'alésage cylindrique mentionné en premier (11) et plus grand que le diamètre de l'alésage cylindrique mentionné en second (16), lequel alésage cylindrique (13) se termine au commencement des fentes longitudinales, après quoi l'alésage cylindrique (13) devient progressivement l'alésage cylindrique plus petit (16) et en ce que le diamètre extérieur de la portion de fût (9b) est plus petit que le diamètre extérieur du reste du fût (9).

Fig-1

Fig-2